# EUROPEAN PATENT APPLICATION

(11) **EP 4 675 607 A1**
(43) Date of publication of application: **07.01.2026**
(21) Application number: 24777625.5
(22) Date of filing: 01.03.2024
(51) Int. Cl.: G09G 5/00, B60K 35/00, B60K 37/00, G06F 11/00, H04N 7/10, B60R 16/023, G06F 3/147, B60K 35/21, B60K 35/22, B60K 35/81, H04L 67/12, H04L 67/141, G09G 3/36

(54) **IMAGE DISPLAY SYSTEM FOR TRANSPORTATION MEANS AND IMAGE DISPLAY METHOD FOR TRANSPORTATION MEANS**

(30) Priority: 28.03.2023 CN 202310342351
(71) Applicant: Shenzhen Yinwang Intelligent Technologies Co., Ltd., Shenzhen, Guangdong 518110 (CN)
(72) Inventor: WANG, Yin, Shenzhen, Guangdong 518129 (CN)
(74) Representative: MERH-IP Matias Erny Reichl Hoffmann Patentanwälte PartG mbB
(86) International application number: PCT/CN2024/079608
(87) International publication number: WO 2024/198835

(57) **Abstract**

An image display system of a transportation means and an image display method of the transportation means are provided, and pertain to the field of image display technologies. In the image display system and the image display method, a first transmission path and a second transmission path are established between a control module and a display module. The control module may compare first image data transmitted through the first transmission path with second image data transmitted through the second transmission path, to determine that first displayed content is inconsistent with second displayed content, and therefore, to provide a reference basis for subsequent processing (for example, processing such as giving an alarm prompt or correcting the second displayed content) by the control module. According to the method, whether content displayed by the display module is accurate can be determined. If the content is inaccurate, subsequent processing may be performed in a timely manner, to ensure accuracy of an image displayed by the display module. This helps improve safety of a vehicle during use.

## Description

This application claims priority to Chinese Patent Application No. 202310342351.X, filed on March 28, 2023 and entitled "IMAGE DISPLAY SYSTEM OF TRANSPORTATION MEANS AND IMAGE DISPLAY METHOD OF TRANSPORTATION MEANS", which is incorporated herein by reference in its entirety.

### TECHNICAL FIELD

The present disclosure relates to the field of image display technologies, and in particular, to an image display system of a transportation means and an image display method of the transportation means.

### BACKGROUND

With increasingly high requirements of people for driving experience of transportation means (for example, a vehicle, a ship, an aircraft, or a train), an increasing quantity of transportation means manufacturers replace a display module in a transportation means with a liquid crystal display (Liquid Crystal Display, LCD), for example, replace a mechanical dashboard in a vehicle with an LCD dashboard.

In the transportation means, image data displayed by the display module is usually generated by a control module (for example, a head unit in the vehicle). The vehicle is used as an example. The LCD dashboard may usually display dynamic data (for example, a vehicle speed or a fuel level of the vehicle) and various indicator icons (for example, a front fog/rear fog indicator, a low beam/high beam indicator, a left turn/right turn indicator, an ABS fault indicator, a brake system fault indicator, and an alarm indicator for an unfastened seat belt), and image data displayed by the LCD dashboard is usually generated by the head unit and sent to the LCD dashboard.

However, due to problems such as an image frame generation error, image data is inevitably damaged, resulting in the LCD dashboard being unable to display the correct image data. This poses a safety hazard in a traveling process of the vehicle.

### SUMMARY

The present disclosure provides an image display system of a transportation means and an image display method of the transportation means, so that a problem that an LCD dashboard cannot display correct image data in a related technology can be resolved. Technical solutions are described as follows.

According to a first aspect, an image display system of a transportation means is provided. The image display system includes a control module and a display module, and a first transmission path and a second transmission path are established between the control module and the display module, to implement bidirectional communication between the control module and the display module. For example, the first transmission path is used to transmit data or a signal from the control module to the display module, and the second transmission path is used to transmit data or a signal from the display module to the control module. Optionally, the first transmission path is used to transmit data or a signal from the display module to the control module, and the second transmission path is used to transmit data or a signal from the control module to the display module.

The control module is configured to send first image data to the display module through the first transmission path, where the first image data indicates first displayed content. Image data generated by the control module may be considered as one frame of image, and each frame of image includes an indicator icon layer and a real-time information layer. For example, the indicator icon layer includes various indicator icons such as a front fog/rear fog indicator, a low beam/high beam indicator, a left turn/right turn indicator, an ABS fault indicator, a brake system fault indicator, and an alarm indicator for an unfastened seat belt. The real-time information layer may display dynamic data related to a vehicle, for example, a vehicle speed of the vehicle, a fuel level in a fuel tank, and a rotational speed of an engine. A display update period corresponding to the indicator icon layer is greater than a display update period corresponding to the real-time information layer. For example, the display update period corresponding to the indicator icon layer may be a blinking period of an icon, for example, 1 second. The display update period of the real-time information layer is usually frame duration. For example, when a refresh rate of an instrument cluster assembly is 60 hertz, the display update period of the real-time information layer is 1/60 second.

For example, the control module is a head unit. The head unit generates the first image data based on a vehicle speed at a current moment, a fuel level at the current moment, and indication information indicating that the driver's seat belt is not fastened. The first displayed content corresponding to the first image data indicates that should be displayed on the instrument cluster assembly at the current moment. In this case, the first displayed content should be the vehicle speed at the current moment, the fuel level at the current moment, and the icon indicating that the seat belt is not fastened.

The display module is configured to receive the first image data from the control module through the first transmission path. In some examples, the first image data received by the display module is consistent with the first image data generated by the control module. In some other examples, the first image data is damaged during transmission through the first transmission path, resulting in an error in at least a part of the first image data received by the display module. In some other examples, an open circuit occurs during transmission of the first image data. As a result, the display module does not receive any image data.

The display module is further configured to display second displayed content based on the first image data. In some examples, the second displayed content displayed by the display module is the same as the first displayed content corresponding to the first image data generated by the control module. In some other examples, the second displayed content displayed by the display module is partially different from the first displayed content corresponding to the first image data generated by the control module. In some other examples, the display module does not display any content.

In addition, the display module is further configured to send second image data to the control module through the second transmission path, where the second image data indicates the second displayed content displayed by the display module.

The control module is further configured to receive the second image data from the display module through the second transmission path.

The control module is further configured to determine, by comparing the first image data with the second image data, that the first displayed content is inconsistent with the second displayed content. For example, a process in which the control module determines that the second displayed content is inconsistent with the first displayed content may include the following processing steps.

First, the control module extracts, from the second image data, an area image of a target area that needs to be compared.

Then, the control module obtains, based on information about a current activation status of a target indicator icon corresponding to the target area, a reference image corresponding to the target area, where the information about the activation status includes active display or inactive display.

Finally, the control module may compare the area image corresponding to the target area with the reference image of the target area in manners such as CRC verification or a hash algorithm, to obtain a comparison result. For example, the control module uses the CRC verification manner. If a CRC code of the extracted area image is different from a CRC code of the reference image, it is considered that the area image is inconsistent with the reference image. In other words, it is considered that the second displayed content is inconsistent with the first displayed content. In this solution, the area image and the reference image are compared in the CRC verification manner, so that the accurate and reliable comparison result can be obtained. This helps ensure accuracy of the comparison result.

In some examples, when determining that the first displayed content is inconsistent with the second displayed content, the control module may provide an alarm prompt to a driver or a developer, to prompt the driver or the developer to correct and maintain the head unit and/or the instrument cluster assembly. In some other examples, the control module may alternatively perform correction processing, so that the display module corrects the second displayed content.

In this solution, the first transmission path and the second transmission path are established between the control module and the display module. The control module may compare the first image data transmitted through the first transmission path with the second image data transmitted through the second transmission path, to determine that the first displayed content is inconsistent with the second displayed content, and therefore, to provide a reference basis for subsequent processing (for example, processing such as giving an alarm prompt or correcting the second displayed content) by the control module. According to this solution, whether the content displayed by the display module is accurate can be determined. If the content is inaccurate, subsequent processing may be performed in a timely manner, to ensure accuracy of an image displayed by the display module. This helps improve safety of the vehicle during use.

In a possible implementation, a third transmission path is established between the control module and the display module. The control module is further configured to send adjustment information to the display module through the third transmission path, where the adjustment information is used to correct the second displayed content. For example, the adjustment information carries the reference image corresponding to the target area and position information of the target area on an LCD dashboard in the instrument cluster assembly. Because the image data includes a plurality of indicator icons, the target area herein may be considered as a display area of a single indicator icon in the image data, and the reference image may be considered as an image of the indicator icon that should be displayed correctly in the target area.

The display module is further configured to correct the second displayed content based on the adjustment information received from the control module. For example, the following two possible correction manners are provided.

Manner 1: The display module replaces the area image at the position information in the display module (that is, in the first image data) with the reference image, so that displayed content obtained through replacement in the display module is consistent with the first displayed content.

Manner 2: When receiving, through the first transmission path, third image data sent by the control module, the display module replaces an area image at position information in the third image data with the reference image, and the display module displays third image data obtained through replacement. The third image data is a next frame of image of the first image data that is sent by the control module to the display module.

In this solution, the control module sends the adjustment information to the display module through the third transmission path. When an open circuit occurs on the first transmission path, the display module can still receive the adjustment information, and can correct the second displayed content. This helps improve accuracy of the image displayed by the instrument cluster assembly, and helps improve the safety of the vehicle during use.

In a possible implementation, the transportation means may be but is not limited to a vehicle, a ship, an aircraft, a train, or the like. For example, when the transportation means is a vehicle, the control module in the image display system is a head unit of the vehicle, and the display module is an instrument cluster assembly of the vehicle. The head unit may include a system on chip (System on Chip, SoC) and a microcontroller unit (Microcontroller Unit, MCU), and the instrument cluster assembly may include an on-screen display (On-Screen Display, OSD) chip and a liquid crystal display (Liquid Crystal Display, LCD) dashboard.

In a possible implementation, the first transmission path and the second transmission path between the display module and the control module are bidirectional low-voltage differential signaling (Low-Voltage Differential Signaling, LVDS) paths, and the LVDS path is also an LVDS bus.

According to a second aspect, a vehicle is provided. The vehicle includes the vehicle image display system of the transportation means according to the first aspect and the possible implementations of the first aspect.

According to a third aspect, an image display method of a transportation means is provided. The method is applied to a control module in the transportation means, and a first transmission path and a second transmission path are established between the control module and a display module in the transportation means. The method includes:
First, the control module sends first image data to the display module through the first transmission path, where the first image data indicates first displayed content. Image data generated by the control module may be considered as one frame of image, and each frame of image includes an indicator icon layer and a real-time information layer. For example, the indicator icon layer includes various indicator icons such as a front fog/rear fog indicator, a low beam/high beam indicator, a left turn/right turn indicator, an ABS fault indicator, a brake system fault indicator, and an alarm indicator for an unfastened seat belt. The real-time information layer may display dynamic data related to a vehicle, for example, a vehicle speed of the vehicle, a fuel level in a fuel tank, and a rotational speed of an engine. For example, the control module is a head unit. The head unit generates the first image data based on a vehicle speed at a current moment, a fuel level at the current moment, and indication information indicating that the driver's seat belt is not fastened. The first displayed content corresponding to the first image data indicates that should be displayed on the instrument cluster assembly at the current moment. In this case, the first displayed content should be the vehicle speed at the current moment, the fuel level at the current moment, and the icon indicating that the seat belt is not fastened.

Then, the control module receives second image data from the display module through the second transmission path, where the second image data indicates second displayed content displayed by the display module based on the first image data. In some examples, the second displayed content displayed by the display module is the same as the first displayed content corresponding to the first image data generated by the control module. In some other examples, the second displayed content displayed by the display module is partially different from the first displayed content corresponding to the first image data generated by the control module. In some other examples, the display module does not display any content.

Finally, the control module determines, by comparing the first image data with the second image data, that the first displayed content is inconsistent with the second displayed content. For example, a process in which the control module determines that the second displayed content is inconsistent with the first displayed content may include the following processing steps: First, the control module extracts, from the second image data, an area image of a target area that needs to be compared. Then, the control module obtains, based on information about a current activation status of a target indicator icon corresponding to the target area, a reference image corresponding to the target area, where the information about the activation status includes active display or inactive display. Finally, the control module may compare the area image corresponding to the target area with the reference image of the target area in manners such as CRC verification or a hash algorithm, to obtain a comparison result. For example, the control module uses the CRC verification manner. If a CRC code of the extracted area image is different from a CRC code of the reference image, it is considered that the area image is inconsistent with the reference image. In other words, it is considered that the second displayed content is inconsistent with the first displayed content.

In this solution, the first transmission path and the second transmission path are established between the control module and the display module. The control module may compare the first image data transmitted through the first transmission path with the second image data transmitted through the second transmission path, to determine that the first displayed content is inconsistent with the second displayed content, and therefore, to provide a reference basis for subsequent processing (for example, processing such as giving an alarm prompt or correcting the second displayed content) by the control module. According to the method, whether the content displayed by the display module is accurate can be determined. If the content is inaccurate, subsequent processing may be performed in a timely manner, to ensure accuracy of an image displayed by the display module. This helps improve safety of the vehicle during use.

In a possible implementation, a third transmission path is established between the control module and the display module. After determining that the first displayed content is inconsistent with the second displayed content, the method further includes: sending adjustment information to the display module through the third transmission path, where the adjustment information indicates the display module to correct the second displayed content.

For example, the adjustment information carries the reference image corresponding to the target area and position information of the target area on an LCD dashboard in the instrument cluster assembly. Because the image data includes a plurality of indicator icons, the target area herein may be considered as a display area of a single indicator icon in the image data, and the reference image may be considered as an image of the indicator icon that should be displayed correctly in the target area. The following two possible correction manners are provided.

Manner 1: The display module replaces the area image at the position information in the display module (that is, in the first image data) with the reference image, so that displayed content obtained through replacement in the display module is consistent with the first displayed content.

Manner 2: When receiving, through the first transmission path, third image data sent by the control module, the display module replaces an area image at position information in the third image data with the reference image, and the display module displays third image data obtained through replacement. The third image data is a next frame of image of the first image data that is sent by the control module to the display module.

In this solution, the control module sends the adjustment information to the display module through the third transmission path. When an open circuit occurs on the first transmission path, the display module can still receive the adjustment information, and can correct the second displayed content. This helps improve accuracy of the image displayed by the instrument cluster assembly, and helps improve the safety of the vehicle during use.

In a possible implementation, the first transmission path and the second transmission path are bidirectional low-voltage differential signaling LVDS paths, and the LVDS path is also an LVDS bus.

According to a fourth aspect, an image display method of a transportation means is provided. The method is applied to a display module in the transportation means, and a first transmission path and a second transmission path are established between the display module and a control module in the transportation means. The method includes:
First, the display module receives first image data from the control module through the first transmission path. Image data generated by the control module may be considered as one frame of image, and each frame of image includes an indicator icon layer and a real-time information layer. For example, the indicator icon layer includes various indicator icons such as a front fog/rear fog indicator, a low beam/high beam indicator, a left turn/right turn indicator, an ABS fault indicator, a brake system fault indicator, and an alarm indicator for an unfastened seat belt. The real-time information layer may display dynamic data related to a vehicle, for example, a vehicle speed of the vehicle, a fuel level in a fuel tank, and a rotational speed of an engine. For example, the control module is a head unit. The head unit generates the first image data based on a vehicle speed at a current moment, a fuel level at the current moment, and indication information indicating that the driver's seat belt is not fastened. The first displayed content corresponding to the first image data indicates that should be displayed on the instrument cluster assembly at the current moment. In this case, the first displayed content should be the vehicle speed at the current moment, the fuel level at the current moment, and the icon indicating that the seat belt is not fastened.

Then, the display module displays second displayed content based on the first image data. In some examples, the second displayed content displayed by the display module is the same as the first displayed content corresponding to the first image data generated by the control module. In some other examples, the second displayed content displayed by the display module is partially different from the first displayed content corresponding to the first image data generated by the control module. In some other examples, the display module does not display any content.

Finally, the display module sends second image data to the control module through the second transmission path, where the second image data indicates the second displayed content.

In this solution, the display module may transmit the second image data indicating the second displayed content back to the control module, so that the control module compares the second image data with the first image data, to determine whether the second displayed content is consistent with the first displayed content.

In a possible implementation, a third transmission path is established between the control module and the display module. After sending the second image data to the control module through the second transmission path, the method further includes: The display module receives adjustment information from the control module through the third transmission path, and corrects the second displayed content based on the adjustment information received from the control module.

For example, the adjustment information carries the reference image corresponding to the target area and position information of the target area on an LCD dashboard in the instrument cluster assembly. Because the image data includes a plurality of indicator icons, the target area herein may be considered as a display area of a single indicator icon in the image data, and the reference image may be considered as an image of the indicator icon that should be displayed correctly in the target area. The following two possible correction manners are provided.

Manner 1: The display module replaces the area image at the position information in the display module (that is, in the first image data) with the reference image, so that displayed content obtained through replacement in the display module is consistent with the first displayed content.

Manner 2: When receiving, through the first transmission path, third image data sent by the control module, the display module replaces an area image at position information in the third image data with the reference image, and the display module displays third image data obtained through replacement. The third image data is a next frame of image of the first image data that is sent by the control module to the display module.

In this solution, the control module sends the adjustment information to the display module through the third transmission path. When an open circuit occurs on the first transmission path, the display module can still receive the adjustment information, and can correct the second displayed content. This helps improve accuracy of the image displayed by the instrument cluster assembly, and helps improve the safety of the vehicle during use.

In a possible implementation, the first transmission path and the second transmission path are bidirectional low-voltage differential signaling LVDS paths, and the LVDS path is also an LVDS bus.

According to a fifth aspect, a control module in a transportation means is provided. A first transmission path and a second transmission path are established between the control module and a display module in the transportation means, the control module includes a processor, and the processor is configured to perform the method according to the third aspect and the possible implementations of the third aspect.

In a possible implementation, the transportation means is a vehicle, and the control module is a head unit.

According to a sixth aspect, a display module in a transportation means is provided. A first transmission path and a second transmission path are established between the display module and a control module in the transportation means, the display module includes a display chip, and the display chip is configured to perform the method according to the fourth aspect and the possible implementations of the fourth aspect.

In a possible implementation, the transportation means is a vehicle, and the display module is an instrument cluster assembly.

### BRIEF DESCRIPTION OF DRAWINGS

FIG. 1 shows an image display system of a transportation means according to the present disclosure;
FIG. 2 is a diagram of a structure of a head unit according to the present disclosure;
FIG. 3 is a diagram of a structure of an instrument cluster assembly according to the present disclosure;
FIG. 4 is a flowchart of an image display method of a transportation means according to the present disclosure;
FIG. 5 is a diagram of composition of image data according to the present disclosure;
FIG. 6 is a diagram of first displayed content according to the present disclosure;
FIG. 7 is a diagram of second displayed content according to the present disclosure;
FIG. 8 is a flowchart of a method for verifying image data by a head unit according to the present disclosure; and
FIG. 9 is a flowchart of an image display method of a transportation means according to the present disclosure.

### DESCRIPTION OF EMBODIMENTS

Terms used in implementations of the present disclosure are merely used to explain embodiments of the present disclosure, but are not intended to limit the present disclosure. Unless otherwise defined, technical terms or scientific terms used in the implementations of the present disclosure should have common meanings understood by a person of ordinary skill in the art to which the present disclosure pertains. The terms "first", "second", and the like used in the specification and claims of the present disclosure do not indicate any order, quantity, or significance, but are merely intended to distinguish between different components. Similarly, similar terms such as "one" or "a/an" is not intended to indicate a quantity limitation, but is intended to indicate at least one. Similar terms such as "include" or "comprise" mean that an element or object existing before "include" or "comprise" encompasses an element or object and equivalents thereof listed after "include" or "comprise", and another element or object is not excluded. Terms such as "up", "down", "left", and "right" merely indicate a relative position relationship. After an absolute position of a described object changes, the relative position relationship may also change correspondingly. "A plurality of" means two or more, unless otherwise specified.

With increasingly high requirements of people for driving experience of transportation means (for example, a vehicle, a ship, an aircraft, or a train), an increasing quantity of transportation means manufacturers replace a display module in a transportation means with a liquid crystal display (Liquid Crystal Display, LCD), for example, replace a mechanical dashboard in a vehicle with an LCD dashboard. In the transportation means, image data displayed by the display module is usually generated by a control module (for example, a head unit in the vehicle).

However, in a process in which the control module generates an image frame and in a process in which the control module sends the generated image frame to the display module, image frame data is inevitably damaged. For example, the control module generates an incorrect image frame, or intermittent communication disconnection, data damage, or the like occurs in a process in which the control module sends a specific image frame to the display module. After the image frame data is damaged, the LCD dashboard can display only incorrect image frame data. As a result, determining of a driver is affected. This poses a safety hazard in a process in which the driver drives the transportation means.

The present disclosure provides an image display system of a transportation means, and correspondingly provides an image display method of the transportation means, so that a problem that the LCD dashboard cannot display correct image data in a related technology can be resolved. To make the objectives, technical solutions, and advantages of the present disclosure clearer, the following further describes in detail, with reference to accompanying drawings, two systems and two methods provided in the present disclosure by using an example in which a transportation means is a vehicle, a control module is a head unit of the vehicle, and a display module is an LCD dashboard of the vehicle.

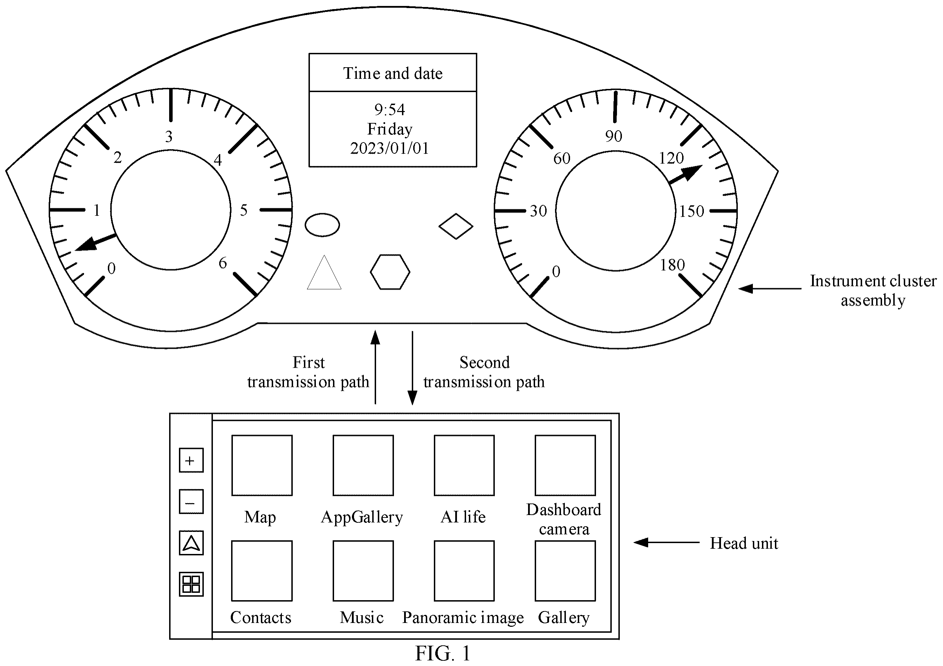

FIG. 1 shows an image display system of a transportation means according to the present disclosure. For example, as shown in FIG. 1, the image display system of the transportation means includes a control module and a display module. In other words, when the transportation means is a vehicle, the image display system includes a head unit (namely, the control module) and an instrument cluster assembly (namely, the display module).

A first transmission path and a second transmission path are established between the head unit and the instrument cluster assembly. In other words, the head unit and the instrument cluster assembly implement bidirectional communication through the first transmission path and the second transmission path. In some examples, the first transmission path and the second transmission path are bidirectional low-voltage differential signaling (Low-Voltage Differential Signaling, LVDS) paths, and the LVDS path is also an LVDS bus. In other words, both the first transmission path and the second transmission path are LVDS paths. The first transmission path is used to transmit data or a signal from the head unit to the instrument cluster assembly, and the second transmission path is used to transmit data or a signal from the instrument cluster assembly to the head unit. Optionally, the first transmission path is used to transmit data or a signal from the instrument cluster assembly to the head unit, and the second transmission path is used to transmit data or a signal from the head unit to the instrument cluster assembly.

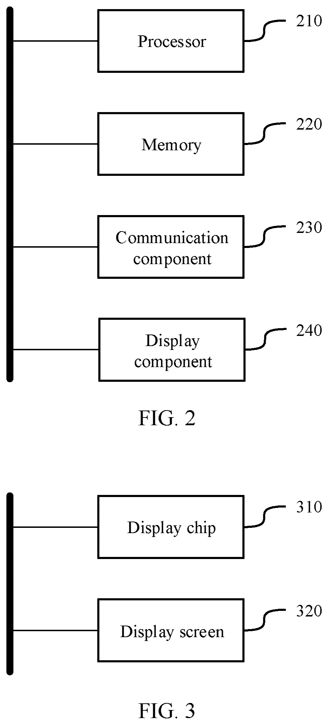

FIG. 2 is a diagram of a structure of a head unit according to the present disclosure. For example, as shown in FIG. 2, the head unit may include a processor 210, a memory 220, and a communication component 230.

The processor 210 may be a system on chip (System on Chip, SoC), or may be a central processing unit (Central Processing Unit, CPU) or the like. The processor 210 may be configured to: send first image data to the instrument cluster assembly, receive second image data from the instrument cluster assembly, compare the first image data with the second image data, and the like.

In some examples, the processor 210 may include a SoC chip and a microcontroller unit (Microcontroller Unit, MCU). The MCU is configured to: receive a controller area network (Controller Area Network, CAN) signal sent by another component of the vehicle, and send the received CAN signal to the SoC chip for subsequent processing. For example, the MCU receives a CAN signal that is sent from a driver position and that indicates that the driver's seat belt is not fastened, the MCU sends the CAN signal to the SoC chip, and the SoC chip may determine, based on the CAN signal, an indicator icon corresponding to a case in which the seat belt is not fastened, and further send the indicator icon to the instrument cluster assembly for display by the instrument cluster assembly, to remind a driver to fasten the seat belt in a timely manner.

The memory 220 may be various volatile memories or non-volatile memories, for example, a solid-state disk (Solid-State Disk, SSD) or a dynamic random access memory (Dynamic Random Access Memory, DRAM). The memory 220 may be configured to store prestored data, intermediate data, and result data, for example, the first image data, the second image data, and adjustment information, in a process of performing the image display method of the transportation means.

The communication component 230 may be a wired network connector, a wireless fidelity (Wireless Fidelity, Wi-Fi) module, a Bluetooth module, a cellular network communication module, or the like. The communication component 230 may be configured to perform data transmission with another device. The another device may be the instrument cluster assembly of the vehicle, an engine control system of the vehicle, or the like. The communication component 230 may be configured to send the first image data to the instrument cluster assembly, may be configured to receive the second image data from the instrument cluster assembly, and the like.

In addition to the processor 210, the memory 220, and the communication component 230, the head unit may further include a display component 240. The display component 240 may be a twisted nematic (Twisted Nematic, TN) panel, a vertical alignment (Vertical Alignment, VA) panel, an in-plane switching (In-Plane Switching, IPS) panel, or the like. The display component 240 may be configured to display a related picture of interaction with a user, for example, multimedia content or an image around the vehicle.

FIG. 3 is a diagram of a structure of an instrument cluster assembly according to the present disclosure. As shown in FIG. 3, the instrument cluster assembly includes a display chip 310 and a display screen 320. The display chip 310 may be but is not limited to an on-screen display (On-Screen Display, OSD) chip, and the display screen 320 may be but is not limited to an LCD dashboard. For example, in the instrument cluster assembly, the OSD chip 310 is electrically connected to the LCD dashboard 320 through an LVDS bus (also referred to as an LVDS path), and communication is established between the OSD chip 310 and the head unit through the bidirectional LVDS path. After receiving image data sent by the head unit, the OSD chip 310 controls, based on the received image data, the LCD dashboard 320 to perform corresponding display.

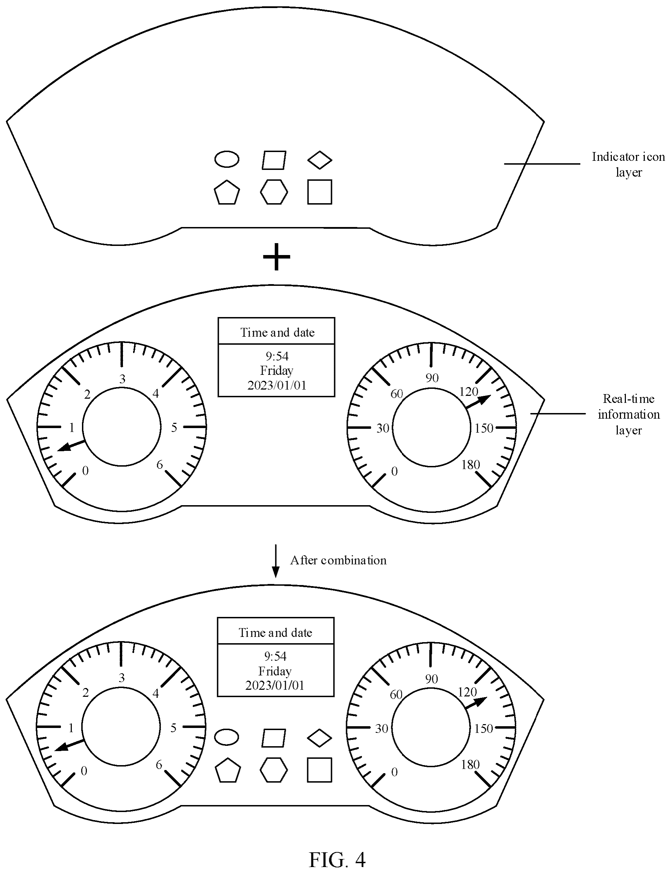

In some examples, image data generated by the control module may be considered as one frame of image. As shown in FIG. 4, each frame of image includes an indicator icon layer and a real-time information layer. The indicator icon layer includes various indicator icons such as a front fog/rear fog indicator, a low beam/high beam indicator, a left turn/right turn indicator, an ABS fault indicator, a brake system fault indicator, and an alarm indicator for an unfastened seat belt. These indicator icons may enter a steady-on state or a blinking state after being triggered. The real-time information layer may display dynamic data related to the vehicle, for example, a vehicle speed of the vehicle, a fuel level in a fuel tank, and a rotational speed of an engine, and the dynamic data needs to be updated in real time.

A display update period corresponding to the indicator icon layer is greater than a display update period corresponding to the real-time information layer. In some examples, the indicator icon layer may include a blinking icon and a steady-on icon simultaneously. A blinking process of the blinking icon is that the blinking icon is illuminated for 1 second and dimmed for 1 second, and then is re-illuminated for 1 second and dimmed for 1 second. In this case, the display update period corresponding to the indicator icon layer may be 1 second. In some other examples, the indicator icon layer may include only a steady-on icon. In this case, the display update period corresponding to the indicator icon layer may be from a moment at which the icon is illuminated to a moment at which the icon stops being steady on. For the real-time information layer, the display update period corresponding to the real-time information layer is usually frame duration. For example, when a refresh rate of the LCD dashboard in the instrument cluster assembly is 60 hertz, the display update period corresponding to the real-time information layer is 1/60 second. The indicator icon layer and the real-time information layer are merely described herein by using examples, which are not limited thereto.

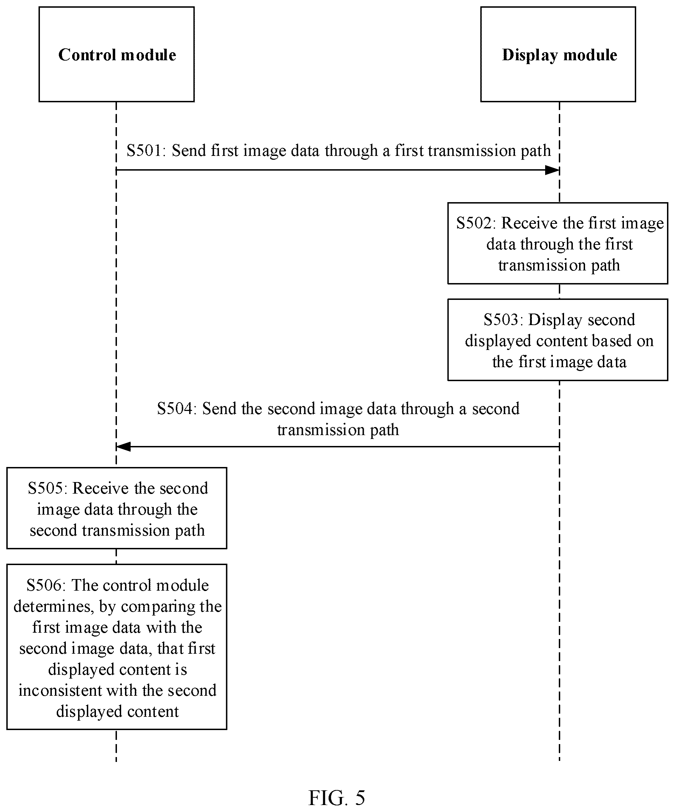

FIG. 5 is a flowchart of an image display method of a transportation means according to the present disclosure. The image display method of the transportation means is applied to an image display system of the transportation means. With reference to FIG. 5, the following describes a process of performing the image display method by the image display system provided in the present disclosure. The process may include the following processing steps.

S501: A control module sends first image data to a display module through a first transmission path.

The first image data indicates first displayed content.

A head unit usually includes an MCU and a SoC chip. The MCU is electrically connected to the SoC chip, and is communicatively connected to another component in a vehicle. In a process in which the head unit generates the first image data, the MCU sends, to the SoC chip, a CAN signal sent by the another component to the head unit. For example, the CAN signal may include a vehicle speed at a current moment, a fuel level at a current moment, and indication information indicating that the driver's seat belt is not fastened. The SoC chip may generate a first real-time information layer based on the vehicle speed at the current moment and the fuel level at the current moment. In addition, the SoC chip may obtain, based on the indication information indicating that the driver's seat belt is not fastened, an icon indicating that the seat belt is not fastened, and generate a first indicator icon layer based on the icon indicating that the seat belt is not fastened. Then, the SoC chip may combine the first real-time information layer and the first indicator icon layer to generate a first image frame, that is, to generate the first image data. The first displayed content indicates content that should be displayed on an instrument cluster assembly at the current moment, and the first displayed content should be the vehicle speed at the current moment, the fuel level at the current moment, and the icon indicating that the seat belt is not fastened.

In some examples, the SoC chip of the head unit may send the first image data to an instrument cluster module (namely, the display module) of the head unit through the first transmission path.

S502: The display module receives the first image data from the control module through the first transmission path.

In the vehicle, the instrument cluster assembly receives the first image data from the head unit through the first transmission path. For example, an OSD chip of the instrument cluster assembly receives, through the first transmission path, the first image data sent by the SoC chip of the head unit.

In some examples, the first image data received by the instrument cluster assembly is consistent with the first image data generated by the SoC chip. In some other examples, the first image data is damaged during transmission through the first transmission path, resulting in an error in at least a part of the first image data received by the instrument cluster assembly. In some other examples, an open circuit occurs during transmission of the first image data. As a result, the instrument cluster assembly does receive any image data. In this case, it may also be considered that the first image data received by the instrument cluster assembly is empty.

S503: The display module displays second displayed content based on the first image data.

In the vehicle, the instrument cluster assembly performs display based on the received first image data, and content displayed on an LCD dashboard in the instrument cluster assembly is the second displayed content.

In some examples, the second displayed content displayed by the instrument cluster assembly is the same as the first displayed content corresponding to the first image data generated by the head unit. In other words, the vehicle speed at the current moment, the fuel level at the current moment, and the icon indicating that the seat belt is not fastened are displayed on the LCD dashboard in the instrument cluster assembly. In some other examples, the second displayed content displayed by the instrument cluster assembly is partially different from the first displayed content corresponding to the first image data generated by the head unit. In some other examples, the instrument cluster assembly does not display any content.

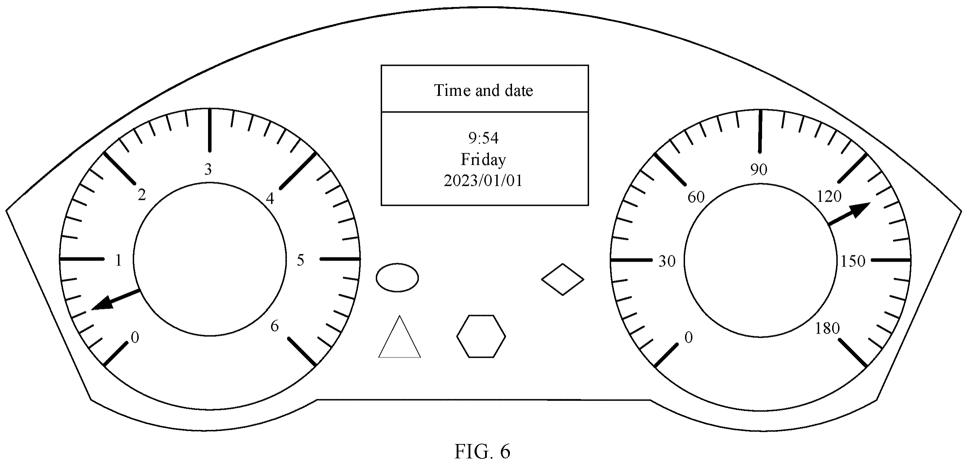

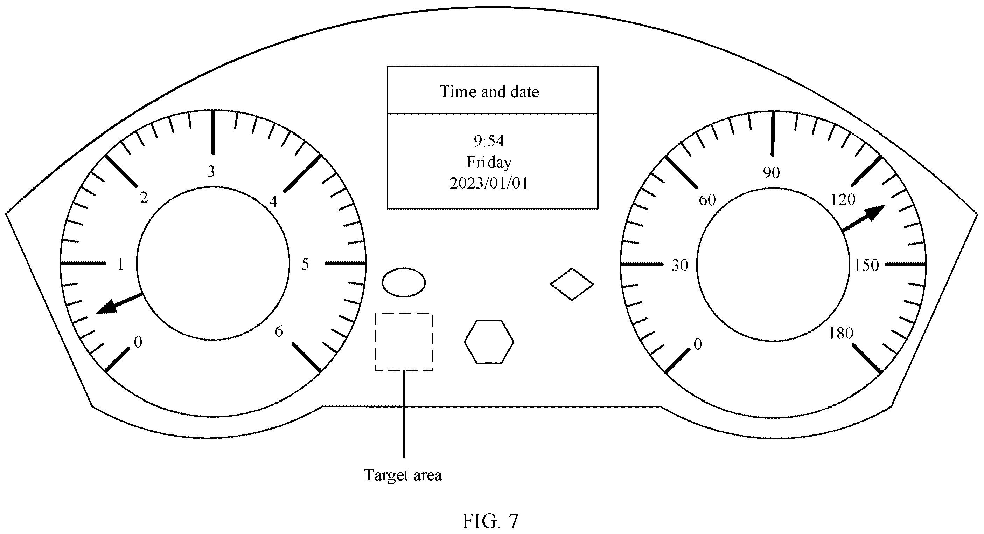

For example, FIG. 6 is a diagram of the first displayed content according to the present disclosure, and FIG. 7 is a diagram of the second displayed content according to the present disclosure. With reference to FIG. 6 and FIG. 7, compared with the first displayed content, the second displayed content does not have a triangular icon shown in FIG. 6.

S504: The display module sends second image data to the control module through a second transmission path.

The second image data indicates the second displayed content.

In the vehicle, when displaying the second displayed content based on the first image data, the instrument cluster assembly may send the second image data to the head unit through the second transmission path simultaneously. The second image data indicates the second displayed content, that is, indicates the second displayed content shown in FIG. 6.

S505: The control module receives the second image data from the display module through the second transmission path.

In the vehicle, the head unit receives the second image data sent by the instrument cluster assembly through the second transmission path.

S506: The control module determines, by comparing the first image data with the second image data, that the first displayed content is inconsistent with the second displayed content.

In the vehicle, after receiving the second image data, the head unit may perform comparison and verification on the first image data and the second image data, to determine consistency between the first displayed content and the second displayed content.

In some examples, that the first image data matches the second image data indicates that the first displayed content is consistent with the second displayed content. For this result, the head unit may not perform any other processing.

In some other examples, that the first image data does not match the second image data indicates that the first displayed content is inconsistent with the second displayed content. For this result, the head unit may perform alarm processing, that is, provide an alarm prompt to a driver or a developer, to prompt the driver or the developer to calibrate and maintain the head unit and/or the instrument cluster assembly, so that it is ensured that image data subsequently displayed by the instrument cluster assembly is accurate, and therefore, safety of the vehicle during use is improved. For this result, the head unit may alternatively perform correction processing, so that the instrument cluster assembly corrects the second displayed content, to ensure that image data subsequently displayed by the instrument cluster assembly is accurate, and therefore, safety of the vehicle during use is improved. A process in which the head unit performs correction processing is described below.

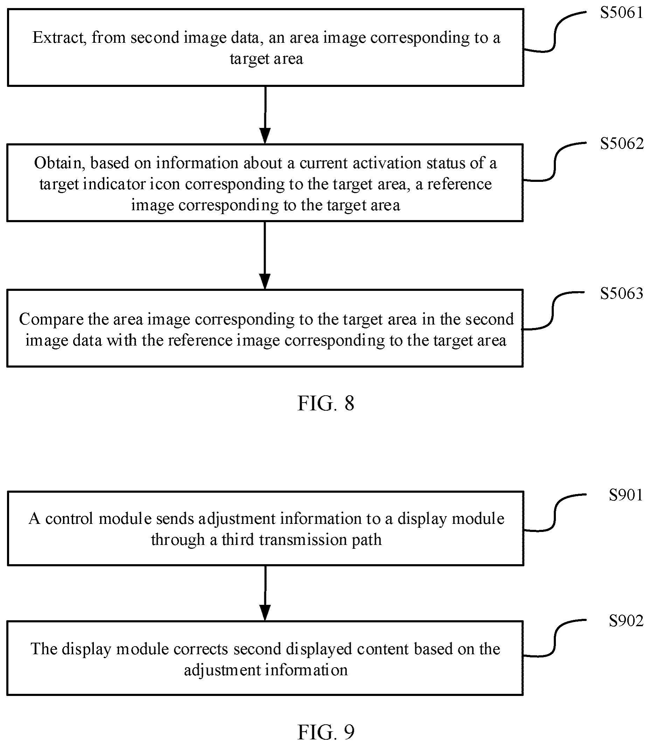

As an example, a process in which the head unit verifies the image data in step S506 is only for the indicator icon layer in the image data. FIG. 8 is a flowchart of a method for verifying image data by a head unit according to the present disclosure. As shown in FIG. 8, the process in which the head unit performs verification may include the following processing steps.

S5061: Extract, from the second image data, an area image corresponding to a target area.

The image data includes a plurality of indicator icons, a position of each indicator icon in the indicator icon layer is fixed, and a correspondence between the indicator icon and the position of the indicator icon in the indicator icon layer is pre-stored in the head unit. Therefore, the target area may be considered as a display area of a single indicator icon in the image data (namely, a display position in an implementation icon layer). For example, the head unit uses a position of a dashed box in FIG. 7 as the target area, so that the head unit can obtain an area image in the dashed box.

S5062: Obtain, based on information about a current activation status of a target indicator icon corresponding to the target area, a reference image corresponding to the target area.

The information about the activation status includes active display or inactive display, and the reference image may be considered as an image of the indicator icon that should be displayed correctly in the target area. When the information about the activation status of the target indicator icon is active display, it indicates that the target indicator icon should be displayed in the image data, and in this case, the reference image is the target indicator icon. When the information about the activation status of the target indicator icon is inactive display, it indicates that nothing should be displayed in the image data, and in this case, the reference image is blank.

For example, a target indicator icon corresponding to the dashed box area in FIG. 7 is the triangular icon in FIG. 6. When an activation status of the triangular icon is active display, a reference image obtained by the head unit is the triangular icon in FIG. 6. When an activation status of the triangular icon is inactive display, a reference image obtained by the head unit is blank, and the reference image is a blank image in the dashed box in FIG. 7.

S5063: Compare the area image corresponding to the target area in the second image data with the reference image corresponding to the target area.

For example, when the area image and the reference image are verified, a cyclic redundancy check (Cyclic Redundancy Check, CRC) code may be used. A process of verifying the area image and the reference image by using the CRC is not described herein again. The area image corresponding to the target area in the second image data has a unique CRC code, and the reference image corresponding to the target area also has a unique CRC code. If the CRC code of the area image is different from the CRC code of the reference image, it is considered that the second image data is inconsistent with the first image data. In other words, the second displayed content is inconsistent with the first displayed content. If the CRC code of the area image is the same as the CRC code of the reference image, it is considered that the first displayed content is consistent with the first displayed content.

Optionally, when the area image and the reference image are verified, a hash (Hash) algorithm may alternatively be used for verification. A method for verifying the area image and the reference image is not limited herein.

It should be noted that the process in which the head unit verifies the image data is merely described herein by using an example, which is not limited thereto.

In the image display system provided in the present disclosure, the first transmission path and the second transmission path are established between the control module and the display module. The control module may compare the first image data transmitted through the first transmission path with the second image data transmitted through the second transmission path, to determine that the first displayed content is inconsistent with the second displayed content, and therefore, to provide a reference basis for subsequent processing (for example, processing such as giving an alarm prompt or correcting the second displayed content) by the control module. According to this solution, whether the content displayed by the display module is accurate can be determined. If the content is inaccurate, subsequent processing may be performed in a timely manner, to ensure accuracy of an image displayed by the display module. This helps improve the safety of the vehicle during use.

In some examples, a third transmission path is further established between the head unit (the control module) and the instrument cluster assembly (the display module). The third transmission path is used to transmit adjustment information sent by the head unit to the instrument cluster assembly, and the adjustment information is used to correct the second displayed content displayed by the instrument cluster assembly. For example, the third transmission path also uses an LVDS path.

FIG. 9 is a flowchart of an image display method of a transportation means according to the present disclosure. After step S506 is performed to determine that the first displayed content is inconsistent with the second displayed content, the head unit performs correction processing on the second displayed content. As shown in FIG. 9, the correction processing may include the following steps.

S901: The control module sends the adjustment information to the display module through the third transmission path.

In the vehicle, when determining that the first displayed content is inconsistent with the second displayed content, the head unit may send the adjustment information to the OSD chip of the instrument cluster assembly through the third transmission path. For example, the adjustment information carries the reference image corresponding to the target area and position information of the target area on the LCD dashboard in the instrument cluster assembly.

S902: The display module corrects the second displayed content based on the adjustment information.

In the vehicle, the OSD chip of the instrument cluster assembly receives the adjustment information from the head unit through the third transmission path, and then the OSD chip performs correction processing on the second displayed content based on the adjustment information. The following two possible correction manners are provided.

### Manner 1

The OSD chip extracts the reference image and the position information in the adjustment information, and replaces the area image at the position information in the LCD dashboard with the reference image, so that displayed content obtained through replacement in the LCD dashboard is consistent with the first displayed content, to ensure that the image data displayed by the instrument cluster assembly is accurate. This helps improve the safety of the vehicle during use.

### Manner 2

The OSD chip extracts the reference image and the position information from the adjustment information. When receiving, through the first transmission path, third image data sent by the head unit, the OSD chip replaces an area image at position information in the third image data with the reference image. The third image data is a next frame of image of the first image data that is sent by the head unit to the instrument cluster assembly through the first transmission path. The OSD chip controls the LCD dashboard to display third image data obtained through replacement, to ensure accuracy of an image displayed again on the LCD dashboard. This helps improve the safety of the vehicle during use.

Optionally, the adjustment information does not carry the reference image and the position information, but carries a target icon identifier of the target indicator icon corresponding to the target area. The icon identifier is unique. In other words, one indicator icon corresponds to one unique icon identifier. The OSD chip stores a correspondence among the icon identifier, the reference image, and the position information. In this case, the OSD chip first extracts the icon identifier of the target indicator icon carried in the adjustment information, and then determines the corresponding reference image and the display position of the target indicator icon on the LCD dashboard based on the icon identifier of the target indicator icon, and finally, the OSD chip corrects the second displayed content based on the reference image and the position information.

If the first transmission path is used to send the adjustment information, when an open circuit occurs on the first transmission path, the adjustment information cannot be normally sent, and the second displayed content cannot be corrected. As a result, the instrument cluster assembly displays an incorrect indicator icon, and a safety hazard always exists. However, according to this solution, the control module sends the adjustment information to the display module through the third transmission path. When the open circuit occurs on the first transmission path, the display module can still receive the adjustment information. Even if the display module cannot obtain the image data, the reference image carried in the adjustment information can be displayed. That is, the indicator icon can be normally displayed. This helps improve the accuracy of the image displayed by the instrument cluster assembly, and helps improve the safety of the vehicle during use.

Optionally, the third transmission path may not be established between the control module and the display module, and the adjustment information is sent by the head unit to the instrument cluster assembly through the first transmission path.

Based on a same technical concept, the present disclosure further provides a control module. A first transmission path and a second transmission path are established between the control module and a display module in a transportation means. The control module includes a processor, and the processor is configured to:
send first image data to the display module through the first transmission path, where the first image data indicates first displayed content; receive second image data from the display module through the second transmission path, where the second image data indicates second displayed content displayed by the display module based on the first image data; and determines, by comparing the first image data with the second image data, that the first displayed content is inconsistent with the second displayed content. Specifically, functions in the foregoing steps S501, S505, and S506, and another implicit step may be implemented.

In a possible implementation, in the transportation means, a third transmission path is further established between the control module and the display module, and a controller of the control module is further configured to send adjustment information to the display module through the third transmission path. Specifically, functions in the foregoing step S901 and another implicit step may be implemented.

In a possible implementation, the first transmission path and the second transmission path between the control module and the display module are bidirectional LVDS paths.

In a possible implementation, the transportation means is a vehicle, the control module is a head unit, and the processor of the control module is a SoC chip of the head unit.

Based on a same technical concept, the present disclosure further provides a display module. A first transmission path and a second transmission path are established between the display module and a control module in a transportation means. The display module includes a display chip, and the display chip is configured to:
receive first image data from the control module through the first transmission path; display second displayed content based on the first image data; and send second image data to the control module through the second transmission path, where the second image data indicates the second displayed content. Specifically, functions in the foregoing steps S502, S503, and S504, and another implicit step may be implemented.

In a possible implementation, in the transportation means, a third transmission path is further established between the display module and the control module, and the display module is further configured to:
receive adjustment information from the control module through the third transmission path; and correct the second displayed content based on the adjustment information received from the control module. Specifically, functions in the foregoing step S902 and another implicit step may be implemented.

In a possible implementation, the first transmission path and the second transmission path between the control module and the display module are bidirectional LVDS paths.

In a possible implementation, the transportation means is a vehicle, the display module is an instrument cluster assembly, and the display chip of the display module is an OSD chip of the instrument cluster assembly.

It should be noted that the transportation means mentioned above may be but is not limited to the vehicle. The transportation means may alternatively be a ship, an aircraft, a train, a subway, an airship, or the like. For example, when the transportation means is a ship, the control module is a console of the ship, and the display module is a display screen of the ship. When the transportation means is an aircraft, the control module is a console of the aircraft, and the display module is a display screen of the aircraft.

Based on a same technical concept, the present disclosure provides a vehicle. The vehicle includes any image display system of a transportation means provided in the present disclosure. Any image display method of the transportation means provided in the present disclosure is applied to the vehicle.

The foregoing descriptions are merely optional embodiments of the present disclosure, but are not intended to limit the present disclosure. Any modification, equivalent replacement, improvement, or the like made within the principle of the present disclosure shall fall within the protection scope of the present disclosure.

## Claims

1. An image display system of a transportation means, wherein the image display system comprises a control module and a display module, and a first transmission path and a second transmission path are established between the control module and the display module;
the control module is configured to send first image data to the display module through the first transmission path, wherein the first image data indicates first displayed content;
the display module is configured to receive the first image data from the control module through the first transmission path;
the display module is further configured to display second displayed content based on the first image data;
the display module is further configured to send second image data to the control module through the second transmission path, wherein the second image data indicates the second displayed content;
the control module is further configured to receive the second image data from the display module through the second transmission path; and
the control module is further configured to determine, by comparing the first image data with the second image data, that the first displayed content is inconsistent with the second displayed content.

2. The image display system according to claim 1, wherein a third transmission path is established between the control module and the display module;
the control module is further configured to send adjustment information to the display module through the third transmission path; and
the display module is further configured to correct the second displayed content based on the adjustment information.

3. The image display system according to claim 1 or 2, wherein the control module is a heat unit, and the display module is an instrument cluster assembly.

4. The image display system according to any one of claims 1 to 3, wherein the first transmission path and the second transmission path are bidirectional low-voltage differential signaling LVDS paths.

5. A vehicle, wherein the vehicle comprises the image display system of the transportation means according to any one of claims 1 to 4.

6. An image display method of a transportation means, wherein the method is applied to a control module in the transportation means, and a first transmission path and a second transmission path are established between the control module and a display module in the transportation means; and the method comprises:
sending first image data to the display module through the first transmission path, wherein the first image data indicates first displayed content;
receiving the second image data from the display module through the second transmission path, wherein the second image data indicates second displayed content displayed by the display module based on the first image data; and
determining, by comparing the first image data with the second image data, that the first displayed content is inconsistent with the second displayed content.

7. The method according to claim 6, wherein a third transmission path is established between the control module and the display module, and after determining that the first displayed content is inconsistent with the second displayed content, the method further comprises:
sending adjustment information to the display module through the third transmission path, wherein the adjustment information indicates the display module to correct the second displayed content.

8. The method according to claim 6 or 7, wherein the first transmission path and the second transmission path are bidirectional low-voltage differential signaling LVDS paths.

9. An image display method of a transportation means, wherein the method is applied to a display module in the transportation means, and a first transmission path and a second transmission path are established between the display module and a control module in the transportation means; and the method comprises:
receiving first image data from the control module through the first transmission path, wherein the first image data indicates first displayed content;
displaying second displayed content based on the first image data; and
sending second image data to the control module through the second transmission path, wherein the second image data indicates the second displayed content.

10. The method according to claim 9, wherein a third transmission path is established between the control module and the display module, and after sending the second image data to the control module through the second transmission path, the method further comprises:
receiving adjustment information from the control module through the third transmission path; and
correcting the second displayed content based on the adjustment information.

11. The method according to claim 9 or 10, wherein the first transmission path and the second transmission path are bidirectional low-voltage differential signaling LVDS paths.

12. A control module in a transportation means, wherein a first transmission path and a second transmission path are established between the control module and a display module in the transportation means, the control module comprises a processor, and the processor is configured to perform the method according to any one of claims 6 to 8.

13. The control module according to claim 12, wherein the control module is a head unit.

14. A display module in a transportation means, wherein a first transmission path and a second transmission path are established between the display module and a control module in the transportation means, the display module comprises a display chip, and the display chip is configured to perform the method according to any one of claims 9 to 11.

15. The display module according to claim 14, wherein the display module is an instrument cluster assembly.
